# EUROPEAN PATENT SPECIFICATION

(11) **EP 3 360 697 B1**
(45) Date of publication and mention of the grant of the patent: **13.11.2019**
(21) Application number: 16853446.9
(22) Date of filing: 26.09.2016
(51) Int. Cl.: B60C 5/01, B60C 9/00, C08K 9/04, C08L 75/04, C08L 77/00, D06M 15/41, D02G 3/48, B60C 5/00, D07B 1/02

(54) **TIRE**
REIFEN
PNEU

(30) Priority: 07.10.2015 JP 2015199622
(43) Date of publication of application: 15.08.2018
(73) Proprietor: Bridgestone Corporation, Tokyo 104-8340 (JP)
(72) Inventor: GIZA, Emil, Tokyo 104-8340 (JP)
(74) Representative: Oxley, Robin John George
(86) International application number: PCT/JP2016/078305
(87) International publication number: WO 2017/061292

(56) References cited:
- WO-A1-2015/005172
- WO-A1-2015/105104
- GB-A- 2 003 525
- JP-A- H03 143 701
- JP-A- 2009 161 872
- JP-A- 2012 046 030
- JP-A- 2012 214 926
- JP-A- 2014 214 300

## Description

### Technical Field

The present invention relates to a tire.

### Background Art

In recent years, it is known to use a thermoplastic polymer material, such as a thermoplastic elastomer (TPE) or a thermoplastic resin, as a tire frame member from the standpoints of weight reduction and ease of recycling. A tire having such a frame member is economical and highly recyclable. From the standpoint of improving the strength of the tire, it is conceivable to arrange a reinforcing layer on the frame member. In such a reinforcing layer, a cord member composed of an inorganic material or an organic material is used and, particularly, specific organic fibers are advantageous from the standpoints of lightweight properties, economic efficiency and strength. By coating the cord member with a rubber or a resin material in the reinforcing layer, the rigidity of the tire in the radial direction can be maintained.

With regard to this point, as technologies for adhering organic fibers with a rubber, for example, technologies of adhering fibers with the use of an epoxy compound or an isocyanate compound have been disclosed (e.g., Japanese Patent Application Laid-Open (JP-A) No. 2004-339299 and WO 2014/074404). Further, for adhesion of a rubber and a fiber, an adhesion method using a resorcinol-formaldehyde-latex resin is known (e.g., JP-A No. 2001-73247). Reference is also made to WO 2015/005172.

### SUMMARY OF THE INVENTION

### Technical Problem

The methods described in JP-A No. 2004-339299, WO 2014/074404 and JP-A No. 2001-73247 assume adhesion between organic fibers and a rubber but do not assume a case where organic fibers are adhered with a resin material.

Meanwhile, in those cases of coating a cord member used in a reinforcing layer with a resin material, there is still a sufficient room for improvement in the adhesion between the resin material and the cord member.

In view of the above-described circumstances, an object of the present disclosure is to provide a tire including a reinforcing layer in which a cord member and a resin material are sufficiently adhered.

### Solution to Problem

<1> A tire including: a tire frame member that is made of a resin and that has bead portions and side portions continuously extending on a tire radial-direction outer side of the respective bead portions; and a reinforcing layer that contains a cord member containing a nylon fiber material and an adhesive layer that is arranged on the cord member and formed from a resorcinol-formaldehyde resin-containing composition and a resin material coating the cord member and the adhesive layer, wherein the resin material does not encompass a vulcanized rubber.

### Effects of Invention

According to the tire of the disclosure, a tire including a reinforcing layer in which a cord member and a resin material are sufficiently adhered is provided.

### BRIEF DESCRIPTION OF DRAWINGS

FIG. 1A is a schematic view for describing the cord member of the disclosure;
FIG. 1B is a schematic view for describing the organic fibers of the disclosure;
FIG. 1C is an enlarged schematic view for describing the organic fibers of the disclosure;
FIG. 2 is a perspective view illustrating a state in which the tire of a first embodiment is cut along the tire rotation axis;
FIG. 3 is an enlarged cross-sectional view illustrating a bead portion of the tire of the first embodiment;
FIG. 4 is a perspective view illustrating a state in which the tire of a second embodiment is cut along the tire rotation axis;
FIG. 5 is a side view illustrating one example of the arrangement of the reinforcing layers of the second embodiment;
FIG. 6 is a side view illustrating another example of the arrangement of the reinforcing layers of the second embodiment;
FIG. 7A is a side view illustrating a reinforcing layer whose tire radial-direction inner end is formed at a narrow width;
FIG. 7B is a perspective view illustrating a state in which the tire radial-direction inner end of the reinforcing layer is wound and fixed on a bead core;
FIG. 8A is a cross-sectional view illustrating an example in which the tire radial-direction inner end of a reinforcing layer is fixed on a side of a bead core;
FIG. 8B is a cross-sectional view illustrating an example in which the tire radial-direction inner end of the reinforcing layer is arranged apart from the bead core;
FIG. 9 is a perspective view illustrating a state in which the tire of a fourth embodiment is cut along the tire rotation axis;
FIG. 10A is a cross-sectional view illustrating a state in which a reinforcing layer is thermally welded to a bead core;
FIG. 10B is a cross-sectional view illustrating a state in which a tire frame member is molded and integrated with the reinforcing layer and the bead core that are illustrated in FIG. 10A, and a belt layer is arranged on the crown portion of the tire frame member;
FIG. 10C is a cross-sectional view illustrating a tire in which a rubber is molded on the outer surface of a tire frame member;
FIG. 11A is a cross-sectional view illustrating a variation of the joined state of a reinforcing layer and a bead core;
FIG. 11B is a cross-sectional view illustrating a variation of the joined state of a reinforcing layer and a bead core;
FIG. 11C is a cross-sectional view illustrating a variation of the joined state of a reinforcing layer and a bead core;
FIG. 11D is a cross-sectional view illustrating a variation of the joined state of a reinforcing layer and a bead core;
FIG. 11E is a cross-sectional view illustrating a variation of the joined state of a reinforcing layer and a bead core;
FIG. 11F is a cross-sectional view illustrating a variation of the joined state of a reinforcing layer and a bead core;
FIG. 12A is a cross-sectional view illustrating a variation of the joined state of a reinforcing layer and a bead core;
FIG. 12B is a cross-sectional view illustrating a variation of the joined state of a reinforcing layer and a bead core;
FIG. 12C is a cross-sectional view illustrating a variation of the joined state of a reinforcing layer and a bead core;
FIG. 12D is a cross-sectional view illustrating a variation of the joined state of a reinforcing layer and a bead core;
FIG. 13A is a cross-sectional view illustrating an example in which, in the tire radial direction, one end of a reinforcing layer on the side of a bead core is positioned between cords of the bead core constituted by a strand bead;
FIG. 13B is a cross-sectional view illustrating an example in which, in the tire radial direction, one end of a reinforcing layer on the side of a bead core is positioned between cords of the bead core constituted by a strand bead;
FIG. 13C is a cross-sectional view illustrating an example in which, in the tire width direction, one end of a reinforcing layer is positioned between cords of a bead core constituted by a mono-strand bead;
FIG. 13D is a cross-sectional view illustrating an example in which, in the tire width direction, one end of a reinforcing layer is positioned between cords of a bead core constituted by a strand bead;
FIG. 14A is a cross-sectional view illustrating a state in which one end of a reinforcing layer on the side of a bead core is arranged between cords of the bead core; and
FIG. 14B is a cross-sectional view illustrating a state in which the reinforcing layer is wound on the periphery of the bead core.

### Mode for Carrying Out the Invention

### <<Tire>>

The tire of the disclosure includes: a tire frame member which is made of a resin and which has bead portions and side portions continuously extending on a tire radial-direction outer side of the respective bead portions; and a reinforcing layer which contains a cord member containing a nylon fiber material and an adhesive layer that is arranged on the cord member and formed from a resorcinol-formaldehyde resin-containing composition and a resin material coating the cord member and the adhesive layer, wherein the resin material does not encompass a vulcanized rubber (the adhesive layer may be hereinafter referred to as "RF layer" as appropriate).

As described above, the reinforcing layer contains two structural elements, which are a specific cord member and an RF layer, and these structural elements are adhered with each other; therefore, when the cord member and the adhesive layer are coated with the resin material contained in the reinforcing layer, the cord member and the adhesive layer are strongly adhered and fixed with the resin material contained in the reinforcing layer. In addition, when the reinforcing layer is arranged inside the tire frame member or in contact with the tire frame member, since the reinforcing layer is formed from a resin material, the adhesive strength between the reinforcing layer and the tire frame member can be improved as compared to a case where a rubber is used.

In the present specification, those numerical ranges that are stated with "to" each denote a range that includes the numerical values stated before and after "to" as the lower and upper limit values, respectively.

The value of the adhesive strength between an organic fiber and a resin material can be determined by utilizing, for example, the method of measuring the adhesive strength between a vulcanized rubber and an organic fiber cord in a test piece, which method is described in WO 2010/125992. That is, the adhesive strength between an organic fiber and a resin material in a test piece was measured by a test method in accordance with "7. Peel Test" prescribed in JIS K6301 (1995).

One example of the invention is described in detail below.

### <Reinforcing Layer>

The reinforcing layer of the disclosure contains a cord member containing a nylon fiber material and an adhesive layer that is arranged on the cord member and formed from a resorcinol-formaldehyde resin-containing composition and a resin material coating the cord member and the adhesive layer. The reinforcing layer is a layer which reinforces the tire, preferably the tire frame member, of the disclosure and the arrangement of the reinforcing layer is not particularly restricted as long as the reinforcing layer is arranged at a position where it can reinforce the tire, preferably the tire frame member; however, the reinforcing layer is preferably arranged on the tire frame member, more preferably in the side portions of the tire frame member. Examples of modes in which the reinforcing layer is arranged on the tire frame member include a mode in which the reinforcing layer is arranged inside the tire frame member itself, and a mode in which the reinforcing layer is arranged on the inner surface or the outer surface of the tire frame member. The reinforcing layer may also take a mode of being arranged away from the tire frame member, for example, a mode in which other layer exists between the tire frame member and the reinforcing layer.

As described above, the reinforcing layer is configured to contain a cord member containing a nylon fiber material and an adhesive layer that is arranged on the cord member and formed from a resorcinol-formaldehyde resin-containing composition and a resin material coating the cord member and the adhesive layer. The cord member and the adhesive layer may be completely coated with the resin material, or the reinforcing layer may have a part where the cord member and the adhesive layer are not coated with the resin material. Further, the reinforcing layer may be configured as, for example, layers which extend from the respective bead portions to the side portions of the tire and are arranged in an array with gaps along the tire circumferential direction.

The thickness of the reinforcing layer is preferably adjusted as appropriate in accordance with the material, thickness and the like of the organic fibers as well as the intended purpose thereof.

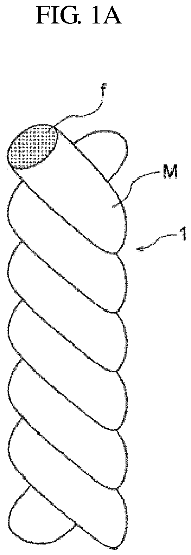

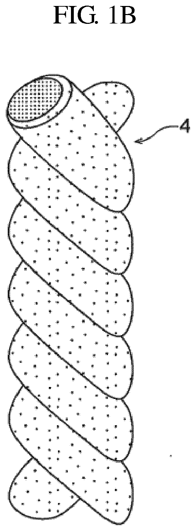

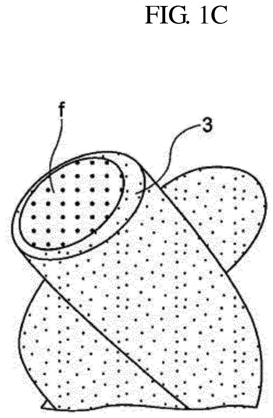

With regard to the reinforcing layer, a specific example of its structure is shown in FIG. 1, and the members and layers are each described below.

### (Cord Member and Adhesive Layer)

The present invention includes a cord member containing a nylon fiber material (hereinafter, simply referred to as "cord member"); and an adhesive layer which is arranged on the cord member and formed from a resorcinol-formaldehyde resin-containing composition. It is preferred that the adhesive layer is arranged in such a manner to cover the entire surface of the cord member; however, within a range that does not impair the effects of the invention, the cord member may have a region where its surface is not covered with the adhesive layer. Further, it is preferred that at least a part of the adhesive layer is arranged in direct contact with the surface of the cord member, and it is more preferred that the adhesive layer is arranged in such a manner that its surface of the side facing the cord member is entirely in direct contact with the surface of the cord member.

The cord member constituting the organic fibers of the disclosure is one which is obtained by twisting in one direction a single multifilament formed by intertwisting plural monofilaments, or one which is obtained by intertwisting two or more such multifilaments. Alternatively, depending on the intended purpose, for example, a single multifilament may be used alone, or a monofilament(s) may be used alone without using any multifilament. The term "plural" means a number of 10 or more.

As the cord member, for example, a multifilament composed of a nylon fiber material can be used.

The structure of the organic fibers is concretely described below referring to FIGs. 1A, 1B and 1C. FIG. 1A is a schematic view for describing a cord member 1 constituting organic fibers of the disclosure. The cord member 1 illustrated in FIG. 1A is formed by intertwisting two multifilaments (M) that are obtained by aggregating a prescribed number of monofilaments (f) and applying a prescribed number of twists to the resultant. It is noted here that adjustments can be made as appropriate, taking into consideration the number of the monofilaments (f) to be aggregated, the number of the twists thereof, the number of the multifilaments (M) to be aggregated, and the number of the twists thereof, as well as the materials and the like of these filaments.

The fineness of all the filaments constituting the cord member 1 is not particularly restricted as long as the effects of the invention are not impaired. For example, from the standpoint of further improving the adhesive strength between the organic fibers and a resin material, the fineness can be from 500 dtex/2 to 3,000 dtex/2.

FIG. 1B is a schematic view illustrating an organic fiber 4 according to the disclosure and provides a schematic cross-sectional view of a case where a multifilament constituting the organic fiber 4 is cut perpendicularly to the fiber axis direction. FIGs. 1C is an enlarged schematic view of the cross-section of the multifilament constituting the organic fiber 4 illustrated in FIG. 1B. As illustrated in FIG. 1C, the organic fiber 4 has a structure in which an RF layer 3 is disposed on the cord member 1 in the center.

In the organic fiber 4, between the cord member 1 and the RF layer 3, the materials constituting the respective layers are adhered with each other. The organic fiber 4 of the disclosure can be partially or entirely coated with a resin material as described below and thereby used as the reinforcing layer of the disclosure.

As illustrated in FIG. 1C, the RF layer 3 is arranged on the cord member 1 and covers the surface of the cord member 1. One side of the RF layer 3 may be adhered to the cord member 1. It is preferred that the RF layer 3 is arranged on and adhered with the cord member 1 in such a manner to cover the entire surface of the cord member 1; however, within a range that does not impair the effects of the invention, the surface of the RF layer 3 may partially have a region that is not adhered with the surface of the cord member 1. As described above, when the organic fiber 4 is coated with a resin material so as to form a reinforcing layer, the outer circumferential surface of the RF layer 3 is covered by and adhered with the resin material.

It is preferred that the end count of the organic fibers is set as appropriate in accordance with the type of the cord member to be used, the type of the resulting tire, and the like. For example, in cases where the cord member has a diameter of 0.5 mm, the reinforcing layer preferably takes a form in which organic fibers obtained by intertwisting the cord members are arranged in a row in parallel to one another with constant intervals at an end count of about 50 fibers per 50 mm. With regard to such placement of the organic fibers, the cord members may be arranged uniformly over the entirety of the reinforcing layer, or with gaps under tread grooves, depending on the shape of the tread.

The cord member contains a nylon fiber material. The term "nylon fiber material" used herein refers to a fiber material that is a polymer (polyamide) constituted by monomers bound together via amide bonds (-CO-NH-) and contains an aliphatic skeleton. Accordingly, the term "nylon fiber material" does not encompass a polyamide (aramid) fiber material consisting of only an aromatic skeleton.

Examples of the nylon fiber material constituting the cord member include nylon fibers made of nylon 6, nylon 11, nylon 12, nylon 66, nylon 612, and the like. Nylon 6 has a structural unit represented by, for example, {CO-(CH₂)₅-NH}ₙ (wherein, n represents an arbitrary number of repeating units); nylon 11 has a structural unit represented by, for example, {CO-(CH₂)₁₀-NH}ₙ (wherein, n represents an arbitrary number of repeating units); nylon 12 has a structural unit represented by, for example, {CO-(CH₂)₁₁-NH}ₙ (wherein, n represents an arbitrary number of repeating units); nylon 66 has a structural unit represented by, for example, {CO(CH₂)₄CONH(CH₂)₆NH}ₙ (wherein, n represents an arbitrary number of repeating units); and nylon 612 has a structural unit represented by, for example, {CO(CH₂)₁₀CONH(CH₂)₆NH}ₙ (wherein, n represents an arbitrary number of repeating units).

The nylon fiber material can be synthesized by any known method, such as ring-opening polycondensation of a lactam or polycondensation of a diamine and a dibasic acid.

The cord members contained in the large number of the organic fibers used in the reinforcing layer may all be fiber materials of a single kind, or fiber materials of different kinds may be used among the organic fibers.

The cord members may also contain a fiber material other than the nylon fiber material. The cord members can each be, for example, a multifilament that is obtained by allowing plural monofilaments composed of the nylon fiber material and plural monofilaments composed of a fiber material of other kind to aggregate and subsequently applying a prescribed number of twists to the resulting aggregate.

In cases where the cord member contains a fiber material other than the nylon fiber material, however, it is preferred that the nylon fiber material is contained as a fiber material constituting the surface of the cord member (the surface on which the RF layer is formed). In the fiber materials constituting the surface of the cord member, the ratio of the nylon fiber material (area ratio) is preferably 50% or higher, more preferably 75% or higher, particularly preferably 100%.

In addition to the nylon fiber material, the cord member may further contain, as required, an additive(s) such as an age resistor (e.g., a styrenated phenol or a hindered phenol), a silicon-based, higher alcohol-based or mineral oil-based antifoaming agent, a reaction terminator, and/or an antifreezing agent.

### <Adhesive Layer>

The adhesive layer (RF layer) is a layer arranged on the cord member and also a layer formed from a resorcinol-formaldehyde resin-containing composition (hereinafter, may be referred to as "RF composition" as appropriate). The "layer formed from a resorcinol-formaldehyde resin-containing composition" is a layer formed by allowing the resorcinol-formaldehyde resin contained in the RF composition to undergo a reaction.

The resorcinol-formaldehyde resin (hereinafter, may also be referred to as "resorcinol-formaldehyde condensate") constituting the RF layer is a compound obtained by condensation between a phenolic compound containing resorcinol in at least a part thereof and formaldehyde.

The resorcinol-formaldehyde condensate is preferably of a resol type that has only a small number of branches and the like (in the form of a general phenol resin for adhesives). Further, the resorcinol-formaldehyde condensate is preferably one in which neither a methylol group nor a dimethylene ether bond (dibenzyl ether bond) remains and whose condensation reaction hardly proceeds by itself even with heating, that is, one which has high stability. For example, the methylene bond ratio in the total number of binding sites between phenolic compound molecules can be preferably 90% or higher, more preferably 95% or higher, still more preferably 97% or higher. In other words, it is believed that the resorcinol-formaldehyde condensate is preferably, for example, one in which several phenolic compound molecules are substantially linearly bound almost exclusively by methylene bonds.

In the resorcinol-formaldehyde condensate, some or all of the phenolic compound molecules bound via formaldehyde-derived moieties are resorcinol. The resorcinol-formaldehyde condensate may be modified in the manner mentioned in JP-A No. 2014-001270.

The molar ratio (F/R) of formaldehyde (F) and resorcinol (R) that are used for the formation of the RF layer can be selected as appropriate in accordance with the intended purpose.

The resorcinol-formaldehyde condensate can be obtained by adding formaldehyde to resorcinol dissolved in a solvent and subsequently stirring and mixing the resultant at a prescribed temperature for a prescribed period of time. As a solution used in this case, acidic, neutral or alkaline water, or an organic solvent such as acetone or alcohol can be used and, in order to allow a resorcinol-formaldehyde condensation reaction (resol-forming reaction) to proceed sufficiently, it is preferred to use alkaline or neutral water. It is preferred that this resol-forming reaction is carried out usually in a pH range of 8.0 or higher, preferably from 8.5 to 10.0.

The term "alkaline water" used herein refers to water in which sodium hydroxide, lithium hydroxide, potassium hydroxide, ammonium hydroxide, or an organic amine such as monomethylamine or ammonia, is dissolved.

Alternatively, a neutral water in which resorcinol and formaldehyde are dispersed using an arbitrary surfactant using a ball mill or a sand mill can be used. In this case, in order to allow an adhesive force to be effectively expressed, it is preferred to use the surfactant in such a small amount that does not deteriorate the dispersion state.

The RF layer can be formed as an adhesive layer (RF layer) adhered to the cord member by, for example, applying (coating) an RF composition on the cord member and allowing the RF composition to react with the cord member. In this reaction, resorcinol-formaldehyde condensate reacts with the functional groups on the cord member surface, and the condensate molecules are thereby three-dimensionally intertwined with each other, as a result of which an RF layer strongly adhered to the cord member is formed. In this case, the reaction of the RF composition is preferably carried out with heating and, when heating is performed, the reaction temperature is preferably from 160°C to 180°C.

The content of the resorcinol-formaldehyde resin in the RF layer is not particularly restricted; however, it is, in terms of solid content, preferably from 2% by mass to 20% by mass, more preferably from 3% by mass to 10% by mass.

The content of the adhesive layer in the organic fibers is preferably from 0.5% by mass to 3.0% by mass with respect to the total mass of the organic fibers. By controlling the content of the adhesive layer to be 0.5% by mass or more, the adhesion between the cord member 1 and the adhesive layer (RF layer) 3 can be further improved and the adhesive strength between the organic fibers and the resin material can thus be further enhanced and, by controlling the content of the adhesive layer to be 3.0% by mass or less, the weight of the reinforcing layer can be further reduced, and superior economic efficiency is thus attained. The content of the adhesive layer can be determined by, for example, subtracting the mass of the organic fibers measured before immersion-adhesion of the cord member 1 with the RF composition from the mass of the organic fibers measured after immersion-adhesion of the cord member 1 with the RF composition and subsequent drying.

### (Resin Material)

The resin material is a material that is contained in the reinforcing layer and coats the cord member and the adhesive layer. The term "resin material" used herein does not encompass conventional vulcanized rubbers, such as natural rubbers and synthetic rubbers.

As the resin material, any of thermoplastic resins and thermosetting resins can be used. The term "thermoplastic resins (including thermoplastic elastomers)" used herein refers to polymer compounds that are softened and fluidized as the temperature increases and assume a relatively hard and strong state when cooled. In the present specification, thereamong, those polymer compounds which are softened and fluidized as the temperature increases, assume a relatively hard and strong state when cooled, and have a rubber-like elasticity are defined as thermoplastic elastomers, while those polymer compounds which are softened and fluidized as the temperature increases, assume a relatively hard and strong state when cooled, and do not have a rubber-like elasticity are distinguished as non-elastomer thermoplastic resins.

Further, the term "thermosetting resins" used herein refers to polymer compounds that form a three-dimensional network structure and are hardened as the temperature increases.

Examples of the thermoplastic resins include polyurethane resins, polyolefin resins, polyvinyl chloride resins, and polyamide resins, as well as polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), and dynamically cross-linked thermoplastic elastomers (TPV).

As such a thermoplastic material, for example, one which has a deflection temperature under load (under a load of 0.45 MPa), which is defined in ISO75-2 or ASTM D648, of not lower than 78°C; a tensile strength at yield, which is defined in JIS K7113, of not less than 10 MPa; a tensile elongation at break, which is also defined in JIS K7113, of not less than 50%; and a Vicat softening temperature (Method A), which is defined in JIS K7206, of not lower than 130°C, can be used.

Examples of the thermosetting resins include phenol resins, urea resins, melamine resins, epoxy resins, and polyamide resins.

Thereamong, from the standpoint of adhesion with the above-described organic fibers, it is preferred to use a thermoplastic resin, more preferably a polyamide-based thermoplastic resin or a polyurethane-based thermoplastic resin, particularly preferably a polyamide-based thermoplastic elastomer (TPA).

In addition to the above-described thermoplastic resins (including thermoplastic elastomers) and thermosetting resins, general-purpose resins (e.g., acrylic resins, methacrylic resins, EVA resins, vinyl chloride resins, fluorocarbon resins, and silicone-based resins) can also be used as the resin material.

In cases where a polyamide-based thermoplastic resin is used as the resin material, the elastic modulus (tensile elastic modulus defined in JIS K7113 (1995)) of the polyamide-based thermoplastic resin material is preferably set in a range of from 0.1 times to 10 times of the elastic modulus of the thermoplastic resin constituting the tire frame member. When the elastic modulus of the polyamide-based thermoplastic resin material is 10 times or less of that of the polyamide-based thermoplastic resin material constituting the tire frame member, the crown portion is not excessively hard, so that the tire can be easily fitted to a rim. Meanwhile, when the elastic modulus of the polyamide-based thermoplastic resin material is 0.1 times or greater of that of the thermoplastic resin material constituting the tire frame member, the resin constituting the reinforcing layer is not excessively soft, so that excellent belt in-plane shear rigidity is attained and the cornering ability is improved.

Further, in cases where a polyamide-based thermoplastic resin material is incorporated into the resin material, from the standpoint of improving the pull-out resistance (difficulty to be pulled out) of the organic fibers, preferably not less than 20%, more preferably not less than 50% of the surface of the organic fibers is coated with the polyamide-based thermoplastic resin material. The content of the polyamide-based thermoplastic resin material in the reinforcing layer is, from the standpoint of improving the pull-out resistance of the organic fibers, preferably not less than 20% by mass, more preferably not less than 50% by mass, with respect to the total mass of the materials constituting the reinforcing layer excluding the organic fibers.

In order to configure the reinforcing layer in such a manner to contain a resin material, for example, the reinforcing layer can be formed in such a manner that, in a cross-sectional view taken along the axial direction of the tire frame member, the organic fibers are at least partially coated with the outer circumferential portion of the tire frame member formed from a polyamide-based thermoplastic resin material. In this case, the polyamide-based thermoplastic resin-containing resin material of the tire frame member outer circumferential portion that coats the organic fibers corresponds to the resin material constituting the reinforcing layer, and the reinforcing layer is thus constituted by the polyamide-based thermoplastic resin material forming the tire frame member and the organic fibers.

### (Production Example of Reinforcing Layer)

In the tire of the disclosure, the reinforcing layer contains organic fibers and a resin material coating the organic fibers. The reinforcing layer is arranged preferably on the tire frame member, more preferably in the side portions of the tire frame member. The reinforcing layer arranged on the tire frame member can be produced by, for example, a process including the following steps, namely:
(1) the RF treatment step of obtaining organic fibers by applying a resorcinol-formaldehyde resin-containing RF composition onto the surface of a cord member containing a nylon fiber material and subsequently heating the resultant to a temperature of from 160°C to 180°C so as to form an adhesive layer (RF layer); and
(2) the resin coating treatment step of, after the RF treatment step, forming a reinforcing layer by arranging the thus obtained plural organic fibers in parallel to one another with desired gaps on a tire frame member, applying a resin material onto the surface of the thus formed adhesive layer (RF layer), and subsequently heating the resultant.

In the RF treatment step, an RF layer can be formed by applying a resorcinol-formaldehyde condensate-containing RF composition onto the surface of a cord member and subsequently heating the resultant at a temperature of from 160°C to 180°C.

In the RF treatment step, from the standpoint of further improving the adhesion between the RF layer and the cord member, the drying step of drying a coating film of the RF composition may be incorporated, and the baking step of baking the coating film of the RF composition may further be incorporated thereafter. By incorporating the drying step, the solvent contained in the RF composition is sufficiently removed, so that the subsequent baking step can be performed efficiently. In the RF treatment step, in cases where the drying step and the baking step are performed, the heating temperature is preferably in a range of from 160°C to 180°C for both of these steps. In the drying step, for example, drying is preferably performed at 160°C to 180°C for 70 seconds to 90 seconds. In the baking step, for example, baking is performed at 160°C to 170°C for 50 seconds to 70 seconds.

As a method of applying the RF composition, any known method such as coating, immersion, or extrusion molding can be employed as appropriate. For example, an RF layer can be efficiently formed by immersing the cord member in the RF composition and subsequently drying and baking the resultant in the above-described manner.

In the resin coating treatment step, the cord member (i.e., organic fibers) on which the RF layer is formed in the RF treatment step is coated with a resin, and the resultant is subsequently heated at a prescribed temperature for a prescribed period of time, whereby a reinforcing layer in which organic fibers are coated with a resin material can be produced. It is preferred that the heating temperature in the resin coating treatment step is adjusted as appropriate in accordance with the resin material to be used. For example, in cases where a polyamide-based thermoplastic resin is used as the resin material, the heating temperature is preferably from 220°C to 280°C. The method of applying (coating) the resin material on the organic fibers of the disclosure is not particularly restricted, and a reinforcing layer in which the organic fibers are coated with the resin material can be produced by, for example, setting the organic fibers on a common laminator (coating apparatus), extrusion-molding the resin material at a resin extrusion temperature of from 220°C to 280°C, and then laminating the resultant at a laminator press temperature of from 200°C to 250°C.

Modes for carrying out the invention are described below referring to the drawings. In the drawings, the direction of an arrow C indicates the tire circumferential direction, the direction of an arrow R indicates the tire radial direction, and the direction of an arrow W indicates the tire width direction. The tire radial direction means the direction perpendicular to the tire axis (not illustrated). The tire width direction means the direction parallel to the tire rotation axis. The term "tire width direction" is interchangeable with the term "tire axis direction".

The dimensions of each part are measured in accordance with the method described in Year Book 2013 published by JATMA (Japan Automobile Tyre Manufacturers Association).

### [First Embodiment]

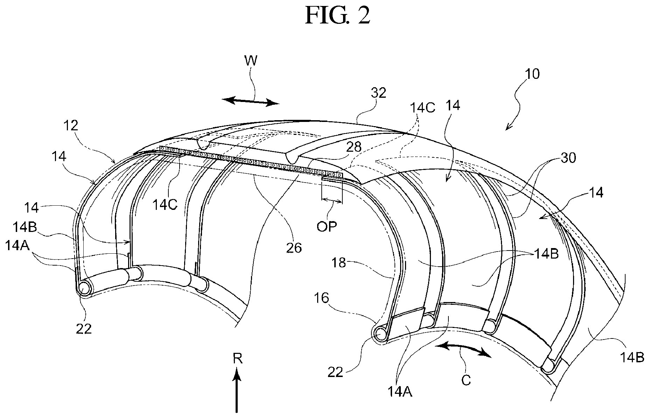

In the followings, specific embodiments of the tire of the disclosure are described referring to the drawings; however, the tire of the disclosure is not restricted to the below-described embodiments. In FIG. 2, a tire 10 of this embodiment includes a tire frame member 12 and reinforcing layers 14.

The tire frame member 12 is made of a resin and includes: bead portions 16; side portions 18, which continuously extend on the tire radial-direction outer side of the respective bead portions 16; and a crown portion 26, which continuously extends on the tire width-direction inner side of the side portions 18 and on which a tread 32 is arranged. It is noted here that the "bead portions 16" refer to the regions extending from each tire radial-direction inner end of the tire frame member 12 to a position of 30% of the cross-sectional height of the tire frame member 12. The tire frame member 12 has a circular shape about the tire axis. Examples of the resin constituting the tire frame member 12 include thermoplastic resins (including thermoplastic elastomers), thermosetting resins, and other general-purpose resins, as well as engineering plastics (including super engineering plastics). The term "resin" used herein does not encompass vulcanized rubbers.

Examples of the resin that can be used in the first embodiment include thermoplastic resins (including thermoplastic elastomers) and thermosetting resins, and the definitions thereof are the same as described above.

Examples of the thermoplastic resins (including thermoplastic elastomers) that can be used in the tire frame member 12 include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), and dynamically cross-linked thermoplastic elastomers (TPV), as well as polyolefin-based thermoplastic resins, polystyrene-based thermoplastic resins, polyamide-based thermoplastic resins, and polyester-based thermoplastic resins.

As such a thermoplastic material, for example, one which has a deflection temperature under load (under a load of 0.45 MPa), which is defined in ISO75-2 or ASTM D648, of not lower than 78°C; a tensile strength at yield, which is defined in JIS K7113, of not less than 10 MPa; a tensile elongation at break, which is also defined in JIS K7113, of not less than 50%; and a Vicat softening temperature (Method A), which is defined in JIS K7206, of not lower than 130°C, can be used.

Examples of the thermosetting resins include phenol resins, epoxy resins, melamine resins, and urea resins.

In addition to the above-described thermoplastic resins (including thermoplastic elastomers) and thermosetting resins, general-purpose resins (e.g., acrylic resins, methacrylic resins, EVA resins, vinyl chloride resins, fluorocarbon resins, and silicone-based resins) can also be used as a resin material.

In each bead portion 16, a bead core 22 is embedded. The thermoplastic material constituting the bead core 22 is preferably an olefin-based, ester-based, amide-based or urethane-based TPE, or a TPV partially kneaded with a rubber-based resin. Such a thermoplastic material preferably has, for example, a deflection temperature under load (under a load of 0.45 MPa), which is defined in ISO75-2 or ASTM D648, of not lower than 75°C; a tensile elongation at yield, which is defined in JIS K7113, of not less than 10%; a tensile elongation at break, which is also defined in JIS K7113, of not less than 50%; and a Vicat softening temperature (Method A), which is defined in JIS K7206, of not lower than 130°C.

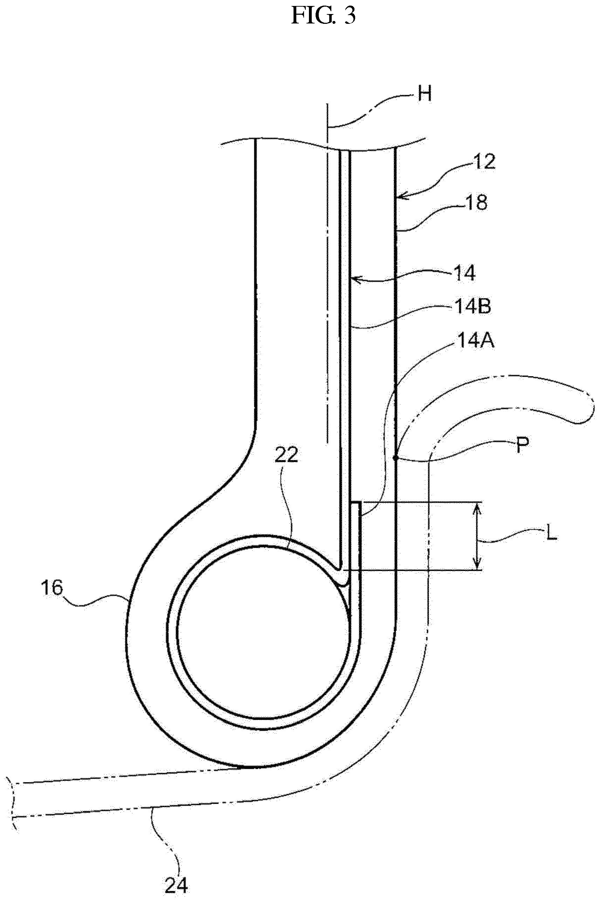

As illustrated in FIG. 3, the bead cores 22 have an annular shape, and are composed of a thermoplastic material having a higher elastic modulus than the resin material of the tire frame member 12. The elastic modulus of the bead cores 22 is preferably 1.5 times or greater, more preferably 2.5 times or greater, of the elastic modulus of the tire frame member 12. With the elastic modulus being less than 1.5 times, it is conceivable that, when the tire 10 is fitted to a rim 24 and inflated with air to increase the internal pressure, the bead portions 16 will be lifted toward the tire radial-direction outer side and consequently come off the rim 24. The bead cores 22 may be formed by insert molding (injection molding) or the like using a hard resin, and the method of forming the bead cores 22 is not particularly restricted.

As illustrated in FIG. 3, the bead cores 22 have, for example, a circular cross-sectional shape. Further, the bead cores 22 may be formed in an undulating shape such that bead core radius varies depending on the position along the tire circumferential direction. In this case, the bead cores 22 themselves can elongate to a certain extent and thus be more easily fitted to a rim. The material of the bead cores 22 is not restricted to a resin (thermoplastic material), and the bead cores 22 may be formed by spirally superimposing resin-coated steel cords in the tire circumferential direction.

In the tire frame member 12, the crown portion 26 extends on the tire radial-direction outer side of the side portions 18. On the outer circumference of the crown portion 26, a belt layer 28 is arranged. This belt layer 28 is formed by, for example, spirally winding a resin-coated cord in the tire circumferential direction.

The tread 32 is arranged on the tire radial-direction outer side of the crown portion 26 and the belt layer 28. This tread 32 is, for example, a pre-cured tread (PCT) formed from a rubber. The tread 32 is formed from a rubber having superior wear resistance than the resin material constituting the tire frame member 12. As the rubber, a rubber of the same kind as the tread rubbers used in conventional rubber-made pneumatic tires, such as a styrene-butadiene rubber (SBR), can be used. Alternatively, as the tread 32, a tread constituted by other kind of resin material having superior wear resistance than the resin material constituting the tire frame member 12 may be used as well.

In the reinforcing layers 14, organic fibers 30 are coated with a resin material, and the reinforcing layers 14 extend from the respective bead portions 16 to the side portions 18 and are arranged in an array with gaps along the tire circumferential direction. In a planarly expanded state, the reinforcing layers 14 are configured to be longer in the tire radial direction than in the tire circumferential direction. As the resin material, for example, the same resin material as the one constituting the tire frame member 12 may be used. The organic fibers 30 may be coated with the resin material on one side or both sides thereof. When both sides of the organic fibers 30 are coated with the resin material, the organic fibers 30 can be arranged in the center of the thickness direction of the reinforcing layers 14. In a case where both sides of the organic fibers 30 are to be coated, different resin materials may be used for each side.

The organic fibers 30 are each constituted by two structural elements, which are a cord member containing a nylon fiber material, and an adhesive layer (RF layer) that is arranged on the cord member and formed from a resorcinol-formaldehyde resin-containing RF composition. In the reinforcing layers 14, the organic fibers 30 extend at least along the tire radial direction. Such organic fibers 30 may be used in combination with organic fibers 30 extending in the tire circumferential direction, and these organic fibers 30 may be superimposed with one another in such a manner to intersect with each other. In this case, the organic fibers 30 may be woven or braided and thereby configured in the form of a cloth. It is noted here that the organic fibers 30 may be inclined with respect to the tire radial direction and/or the tire circumferential direction.

As illustrated in FIG. 3, a tire radial-direction inner end 14A of each reinforcing layer 14 is positioned further toward the tire radial-direction inner side than a rim separation point P of each bead portion 16. The term "rim separation point P" used herein refers to a point where a tire is separated from a rim flange in the absence of a prescribed internal pressure when the tire is fitted to the rim that is described in Year Book 2013 published by JATMA (Japan Automobile Tyre Manufacturers Association) and has dimensions appropriate for the tire. Specifically, the reinforcing layer 14 is anchored on the bead core 22 embedded in the bead portion 16. Specifically, for example, the tire radial-direction inner end 14A of the reinforcing layer 14 is wound on the bead core 22 in such a manner to encircle the bead core 22 once, folded back from the tire inner side to the outer side, and joined to the reinforcing layer 14 itself. As a joining means, hot-air welding or thermo-compression bonding using a hot plate is preferred. As other joining means, sewing may be employed as well. The joining length L is 3 mm or longer, more preferably 5 mm or longer, still more preferably 15 mm or longer. It is noted here that the winding (folding) of the tire radial-direction inner end 14A of the reinforcing layer 14 may be performed from the tire outer side to the inner side.

As illustrated in FIG. 2, a tire radial-direction outer end 14C of each reinforcing layer 14 extends from the bead portion 16 of the tire frame member 12 into the crown portion 26 through the side portion 18 and overlaps with the belt layer 28. The amount of the overlap with the belt layer 28, OP, is preferably 5 mm or greater from the end of the belt layer 28 toward the tire width-direction center side. The reinforcing layer 14 may extend to the tire width-direction center as well. As for the position of the tire radial-direction outer end 14C of the reinforcing layer 14, the reinforcing layer 14 may terminate in the vicinity of the tire maximum-width position in the side portion 18, or may terminate before reaching the crown portion 26 (in a so-called buttress portion).

As illustrated in FIG. 3, an outer surface 14B of each reinforcing layer 14 is positioned further toward the tire outer side than one half of the thickness of the tire frame member 12 (the position of a line H). In other words, the outer surface 14B of the reinforcing layer 14 is positioned on the outer surface side of the tire frame member 12. The reinforcing layers 14 may be exposed on the outer surface of the tire frame member 12.

The position of the outer surface 14B of each reinforcing layer 14 is not restricted to the above-described ones. For example, the outer surface 14B may be positioned at one half of the thickness of the tire frame member 12 (the position of the line H), or may be positioned further toward the tire inner side than the line H.

### (Effects)

This embodiment includes, at least: the tire frame member 12 which is made of a resin and has the bead portions 16, the side portions 18 which continuously extend on the tire radial-direction outer side of the respective bead portions, and the crown portion 26 which continuously extends on the tire width-direction inner side of the side portions and on which a tread is arranged; and the reinforcing layers 14 in which organic fibers are coated with a resin material and which extend from the respective bead portions 16 to the side portions 18 and are arranged in an array along the tire circumferential direction. The effects of this embodiment are described below.

As illustrated in FIG. 2, in the tire 10 of this embodiment, the reinforcing layers 14 exist in the tire frame member 12, and preferably in the side portions 18. That is, because of the presence of the reinforcing layers 14 extending from the respective bead portions to the side portions in the tire frame member 12, the damage propagation speed in the tire frame member 12 can be reduced. In addition, since the reinforcing layers 14 are arranged in an array along the tire circumferential direction and are not in the form of being integrally continuous in the tire circumferential direction, the rigidity in the tire circumferential direction is not excessively high and has a favorable balance with the rigidity in the tire radial direction. This enables to improve the cut resistance performance while taking into consideration the balance between the rigidity in the tire circumferential direction and the rigidity in the tire radial direction.

The outer surfaces 14B of the reinforcing layers 14 are positioned further toward the tire outer side than one half of the thickness of the tire frame member 12. That is, since the outer surfaces 14B of the reinforcing layers 14 are positioned on the outer surface side of the tire frame member 12, the durability of the tire against bending deformation is improved.

In addition, since the tire radial-direction inner ends 14A of the reinforcing layers 14 are positioned further toward the tire radial-direction inner side than the rim separation point P of the bead portions 16, for example, a pinch cut caused by running over a curb or the like can be inhibited.

Moreover, since the reinforcing layers 14 are anchored and wound on the bead cores 22 embedded in the respective bead portions 16, the reinforcing layers 14 are capable of bearing most of the tension generated in the tire. Accordingly, the resistance to internal pressure is remarkably improved. This enables to reduce the thickness of the tire frame member 12, so that the riding comfort can be improved.

As described above, according to the tire 10 of this embodiment, the cut resistance performance can be enhanced and the riding comfort can be further improved while taking into consideration the balance between the rigidity in the tire circumferential direction and the rigidity in the tire radial direction.

Furthermore, in the tire 10, by constituting the organic fibers of the reinforcing layers 14 arranged in the side portions with two layers of the cord member and the adhesive layer (RF layer), the organic fibers can be strongly adhered with not only the reinforcing layers 14 but also the tire frame member 12.

### [Second Embodiment]

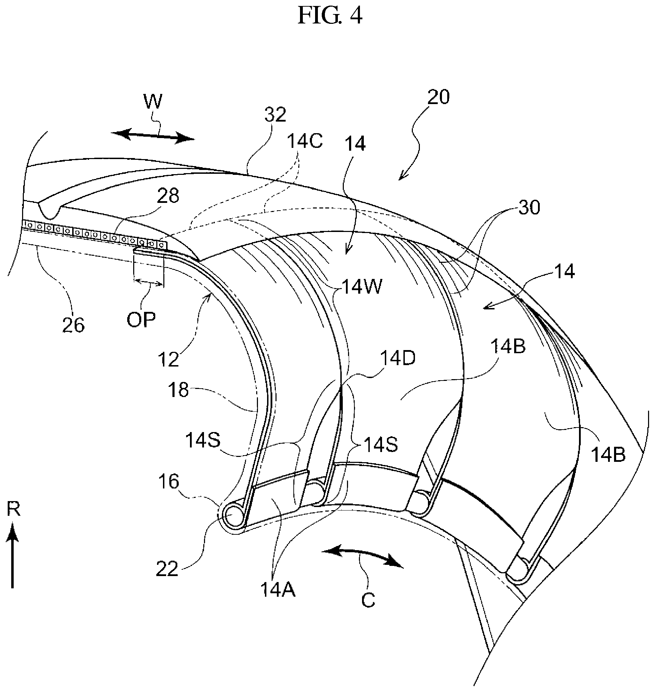

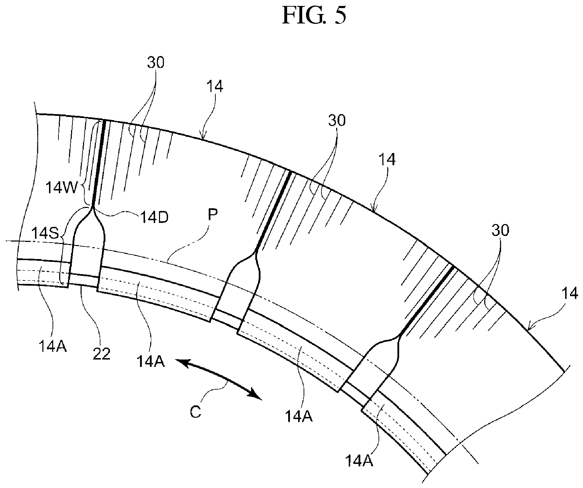

As illustrated in FIGs. 4 and 5, in a tire 20 of this embodiment, the reinforcing layers 14 that are adjacent in the tire circumferential direction are in contact with each other. These reinforcing layers 14 are in contact with each other at least in those parts that include the tire maximum-width position. Such contact includes a case where the end surfaces of the reinforcing layers 14 abut against each other in the tire circumferential direction, and a case where the end surfaces of the reinforcing layers 14 overlap with each other in the tire radial direction.

In each of these reinforcing layers 14, a wide portion 14W on the tire radial-direction outer side and a narrow portion 14S on the tire radial-direction inner side are formed. The wide portion 14W includes the tire maximum-width position of the side portion 18. Such wide portions 14W are in contact with each other. The narrow portions 14S are apart from one another along the tire circumferential direction.

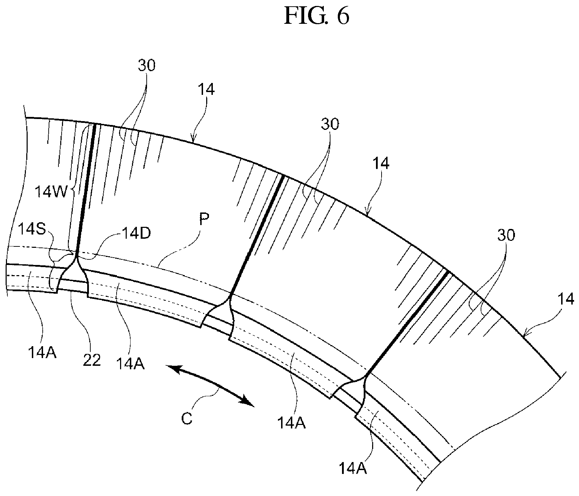

In the example illustrated in FIG. 5, a boundary 14D between the wide portion 14W and the narrow portion 14S is positioned slightly further toward the radial-direction inner side than the tire maximum-width position. The position of the boundary 14D, however, is not particularly restricted thereto and, as illustrated in FIG. 6, it may be positioned further toward the tire radial-direction inner side. That is, in the example illustrated in FIG. 6, the boundary 14D is positioned further toward the tire radial-direction inner side than the rim separation point P of the bead portion 16. This enables to inhibit the generation of a pinch cut that is caused by running over a curb or the like.

According to the tire 20 of this embodiment, since the reinforcing layers 14 are arranged in contact with each other along the tire circumferential direction, the cut resistance performance can be further improved.

Other parts are the same as those of the first embodiment; therefore, the same symbols are assigned to the same parts in the drawings, and descriptions thereof are omitted here.

### [Third Embodiment]

In the first embodiment, other reinforcing layer (not illustrated) may be arranged between the reinforcing layers 14 that are adjacent to each other in the tire circumferential direction. In this case, the other reinforcing layer and the reinforcing layers 14 may be partially superimposed with each other. Alternatively, a configuration in which one of the tire circumferential sides of the other reinforcing layer is partially superimposed with one adjacent reinforcing layer 14 while the other tire circumferential side is arranged with a gap of, for example, 0.1 mm or larger from the other adjacent reinforcing layer 14 without any overlap, may be adopted as well. Further, in the second embodiment, the reinforcing layers 14 that are adjacent to each other in the tire circumferential direction may be partially superimposed with each other.

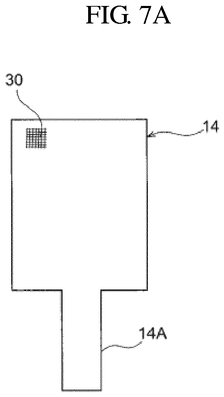

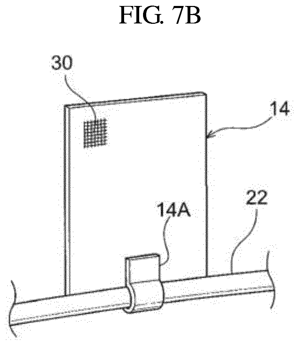

As illustrated in FIGs. 7A and 7B, with the tire radial-direction inner end 14A of each reinforcing layer 14 being formed at a narrow width, the tire radial-direction inner end 14A may be wound on the bead core 22 and then folded back. This enables to inhibit the generation of a wrinkle on the reinforcing layer 14 due to the curvature of the bead core 22.

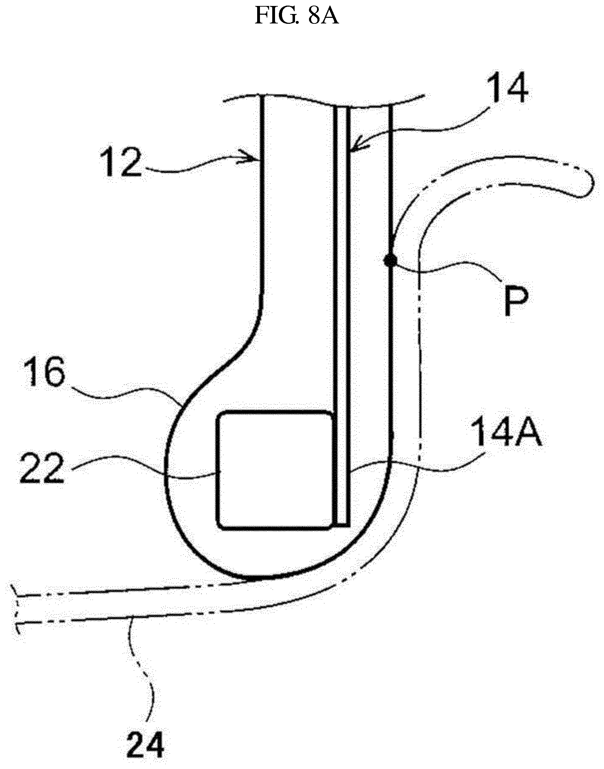

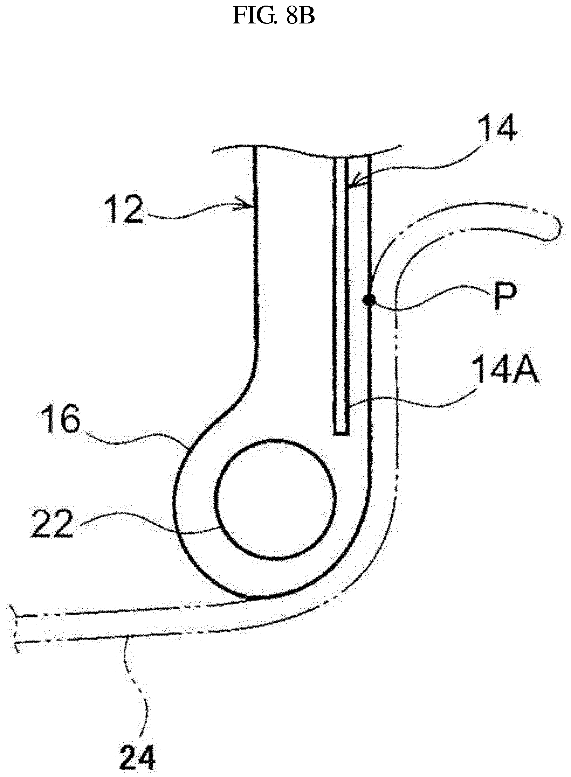

As illustrated in FIG. 8A, the tire radial-direction inner end 14A of each reinforcing layer 14 may be fixed by adhesion or the like on a side of the bead core 22. In this case, the bead core 22 desirably has a polygonal cross-sectional shape. Alternatively, as illustrated in FIG. 8B, the tire radial-direction inner end 14A of each reinforcing layer 14 may be apart from the bead core 22. In this case, the tire radial-direction inner end 14A of the reinforcing layer 14 is desirably positioned further toward the tire radial-direction inner side than the rim separation point P of the bead portion 16. In cases where plural bead cores 22 are arranged in one bead portion 16, the tire radial-direction inner end 14A of each reinforcing layer 14 may be sandwiched by two bead cores 22.

### [Fourth Embodiment]

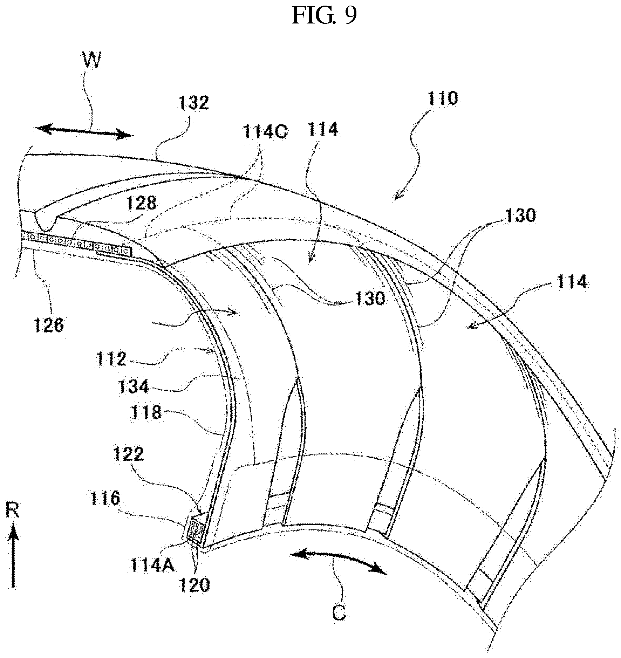

In FIG. 9, a tire 110 of this embodiment includes a tire frame member 112 and reinforcing layers 114.

The tire frame member 112 is made of a resin and includes: bead portions 116; side portions 118, which continuously extend on the tire radial-direction outer side of the respective bead portions 116; and a crown portion 126, which continuously extends on the tire width-direction inner side of the side portions 118 and on which a tread 132 is arranged. It is noted here that the "bead portions 116" refer to the regions extending from each tire radial-direction inner end of the tire frame member 112 to a position of 30% of the tire cross-sectional height. The tire frame member 112 has a circular shape about the tire axis. Examples of a resin material constituting the tire frame member 112 include thermoplastic resins (including thermoplastic elastomers), thermosetting resins, and other general-purpose resins, as well as engineering plastics (including super engineering plastics). The term "resin material" used herein does not encompass vulcanized rubbers.

The term "thermoplastic resins (including thermoplastic elastomers)" used here refers to the same polymer compounds as those defined above for the first embodiment, and examples thereof include the same resins as those exemplified above for the first embodiment. As the thermoplastic resins, for example, those which have the same deflection temperature under load, tensile strength at yield, tensile elongation at break and Vicat softening temperature as those exemplified above for the first embodiment can be used.

Further, the term "thermosetting resins" refers to the same polymer compounds as those defined above for the first embodiment, and examples thereof include the same resins as those exemplified above for the first embodiment. Moreover, examples of other resin materials that can be used also include the same ones as those exemplified above for the first embodiment.

In each bead portion 116, an annular bead core 122 composed of resin-coated cords 120 is embedded. As the material of the cords 120, a steel, an organic fiber, a resin or the like can be used. The bead core 122 is, for example, a strand bead formed by superimposing plural (e.g., three) resin-coated cords 120 while winding the cords 120 along the tire circumferential direction. At a tire widthwise cross-section of the strand bead, the plural cords 120 are coated with a rubber and arrayed. The cords 120 are superimposed, for example, in three layers.

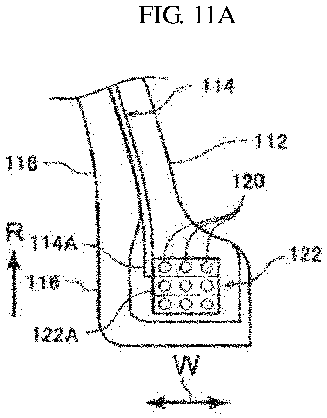

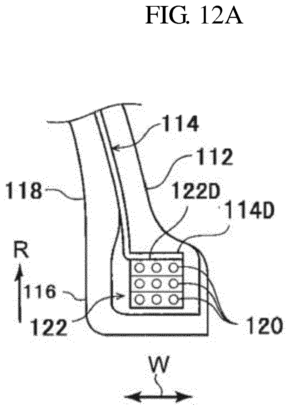

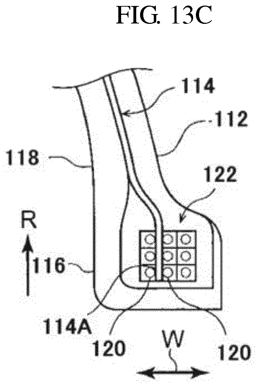

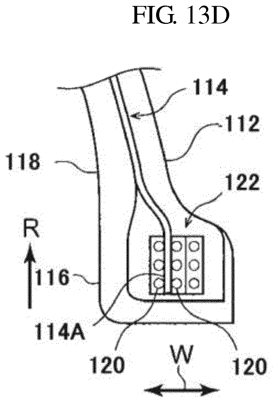

The direction of superimposing the cords 120 may be the tire radial direction as illustrated in FIGs. 11A to 11F and 12A to 12D or the tire width direction as illustrated in FIG. 13D, or the cords 120 may be superimposed in other direction. Alternatively, as illustrated in FIG. 13C, the bead core 122 may be a mono-strand bead formed by superimposing a single resin-coated cord 120 on itself in both the tire width direction and the tire radial direction while winding the cord 120 along the tire circumferential direction. The number of superimposed layers is not restricted to three. Further, the method of forming the bead core 122 is not particularly restricted as long as each cord 120 is coated with a resin, and the bead core 122 does not have to be a strand bead.

The resin material coating the cord 120 is preferably an olefin-based, ester-based, amide-based or urethane-based TPE, or a TPV partially kneaded with a rubber-based resin. Such a thermoplastic material preferably has, for example, a deflection temperature under load (under a load of 0.45 MPa), which is defined in ISO75-2 or ASTM D648, of not lower than 75°C; a tensile elongation at yield, which is defined in JIS K7113, of not less than 10%; a tensile elongation at break, which is also defined in JIS K7113, of not less than 50%; and a Vicat softening temperature (Method A), which is defined in JIS K7206, of not lower than 130°C.

In the tire frame member 112, the crown portion 126 extends on the tire radial-direction outer side of the side portions 118. On the outer circumference of the crown portion 126, a belt layer 128 is arranged. This belt layer 128 is formed by, for example, spirally winding a resin-coated cord in the tire circumferential direction.

The tread 132 is arranged on the tire radial-direction outer side of the crown portion 126 and the belt layer 128. This tread 132 is formed from a rubber having superior wear resistance than the resin material constituting the tire frame member 112. As the rubber, a rubber of the same kind as the tread rubbers used in conventional rubber-made pneumatic tires, such as a styrene-butadiene rubber (SBR), can be used. Alternatively, as the tread 132, a tread constituted by other kind of resin material having superior wear resistance than the resin material constituting the tire frame member 112 may be used as well.

In the reinforcing layers 114, organic fibers 130 are coated with a resin material, and the reinforcing layers 114 are thermally welded to the respective bead cores 122. Thermal welding refers to a process of heat-melting and thereby joining the resin material of the reinforcing layers 114 and the resin material of the bead cores 122. The reinforcing layers 114 are thermally welded to the respective bead cores 122.

As the resin material coating the organic fibers 130, for example, the same resin material as the one constituting the tire frame member 112 may be used. The organic fibers 130 may be coated with the resin material on one side or both sides thereof. When both sides of the organic fibers 130 are coated with the resin material, the organic fibers 130 can be arranged in the center of the thickness direction of the reinforcing layers 114. In a case where both sides of the organic fibers 130 are to be coated, different resin materials may be used for each side.

The organic fibers 130 are each constituted by two layers, which are a cord member containing a nylon fiber material, and an adhesive layer that is arranged on the cord member and formed from a resorcinol-formaldehyde resin-containing RF composition. In the reinforcing layers 114, the organic fibers 130 extend at least along the tire radial direction. Such organic fibers 130 may be used in combination with organic fibers 130 extending in the tire circumferential direction, and these organic fibers 130 may be superimposed with one another in such a manner to intersect with each other. In this case, the organic fibers 130 may be woven or braided and thereby configured in the form of a cloth. It is noted here that the organic fibers 130 may be inclined with respect to the tire radial direction and/or the tire circumferential direction.

As illustrated in FIGs. 11A to 11F, 12A to 12D and 13A to 13D, a variety of variations are conceivable as the mode of joining the reinforcing layers 114 to the respective bead cores 122. It is noted here that the bead core 122 illustrated in FIGs. 11A to 11F, 12A to 12D, 13A and 13B is a strand bead having three layers that are superimposed along the tire radial direction. The bead core 122 illustrated in FIG. 13D is a strand bead having three layers that are superimposed along the tire width direction. The bead core 122 illustrated in FIG. 13C is a mono-strand bead in which the cord 120 is superimposed in three layers along each of the tire radial direction and the tire width direction.

In the example illustrated in FIG. 11A, the reinforcing layer 114 is joined to a part of a tire width-direction outer surface 122A of the bead core 122. This part corresponds to the layer that is positioned furthest toward the tire radial-direction outer side among the three layers constituting the bead core 122.

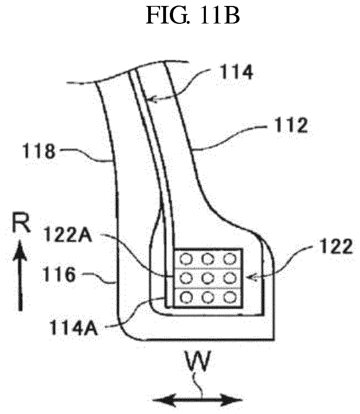

In the example illustrated in FIG. 11B, the reinforcing layer 114 is joined to the entirety of the tire width-direction outer surface 122A of the bead core 122.

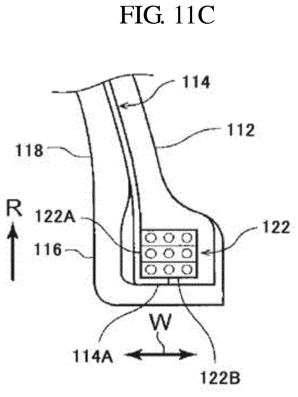

In the example illustrated in FIG. 11C, the reinforcing layer 114 is bent in a substantially L-shape so that it conforms to the tire width-direction outer surface 122A and tire radial-direction inner surface 122B of the bead core 122, and the reinforcing layer 114 is joined over the part from the tire width-direction outer surface 122A to the tire width-direction center of the tire radial-direction inner surface 122B.

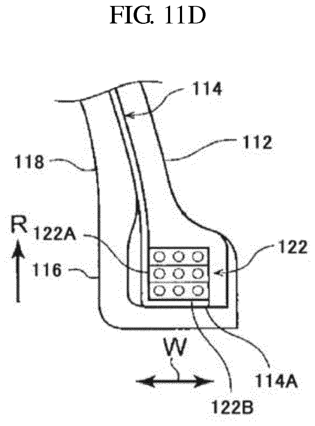

In the example illustrated in FIG. 11D, the reinforcing layer 114 is joined to the entirety of the tire width-direction outer surface 122A and tire radial-direction inner surface 122B of the bead core 122.

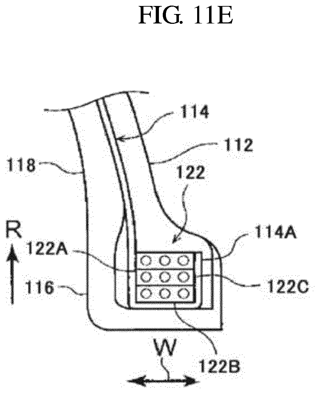

In the example illustrated in FIG. 11E, the reinforcing layer 114 is bent in a substantially U-shape so that it conforms to the tire width-direction outer surface 122A, tire radial-direction inner surface 122B and tire width-direction inner surface 122C of the bead core 122, and the reinforcing layer 114 is joined to the entirety of the tire width-direction outer surface 122A, the tire radial-direction inner surface 122B and the tire width-direction inner surface 122C.

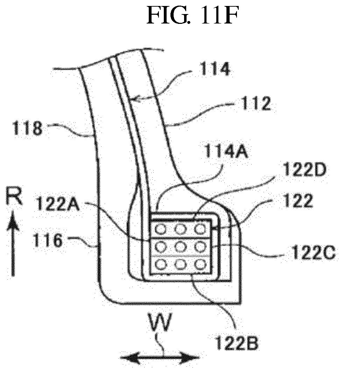

In the example illustrated in FIG. 11F, the reinforcing layer 114 surrounds the periphery of the bead core 122. This reinforcing layer 114 is bent in such a manner to enclose the bead core 122, and is joined to the entirety of the tire width-direction outer surface 122A, the tire radial-direction inner surface 122B, the tire width-direction inner surface 122C and the tire radial-direction outer surface 122D.

In the example illustrated in FIG. 12A, the reinforcing layer 114 is joined to the entirety of the tire radial-direction outer surface 122D of the bead core 122.

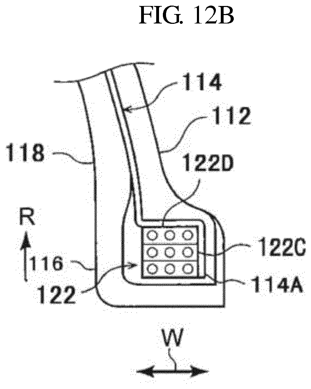

In the example illustrated in FIG. 12B, the reinforcing layer 114 is bent in a substantially L-shape so that it conforms to the tire radial-direction outer surface 122D and tire width-direction inner surface 122C of the bead core 122, and the reinforcing layer 114 is joined to the entirety of the tire radial-direction outer surface 122D and the tire width-direction inner surface 122C.

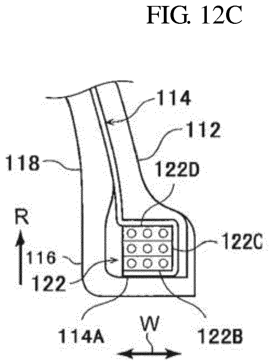

In the example illustrated in FIG. 12C, the reinforcing layer 114 is bent in a substantially U-shape so that it conforms to the tire radial-direction outer surface 122D, the tire width-direction inner surface 122C and the tire radial-direction inner surface 122B, and the reinforcing layer 114 is joined to the entirety of the tire radial-direction outer surface 122D, the tire width-direction inner surface 122C and the tire radial-direction inner surface 122B.

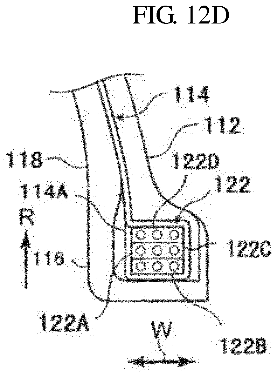

In the example illustrated in FIG. 12D, the reinforcing layer 114 surrounds the periphery of the bead core 122. This reinforcing layer 114 is bent in such a manner to enclose the bead core 122, and is joined to the entirety of the tire radial-direction outer surface 122D, the tire width-direction inner surface 122C, the tire radial-direction inner surface 122B and the tire width-direction outer surface 122A.

In the examples illustrated in illustrated in FIGs. 11A to 11F and 12A to 12D, an end 114A of the reinforcing layer 114 on the bead core side is positioned on the periphery of the bead core 122. This end 114A is thermally welded to the bead core 122. It is noted here, however, that the end 114A may be arranged at any position as long as it is on the periphery of the bead core 122, and the end 114A does not have be thermally welded to the bead core 122.

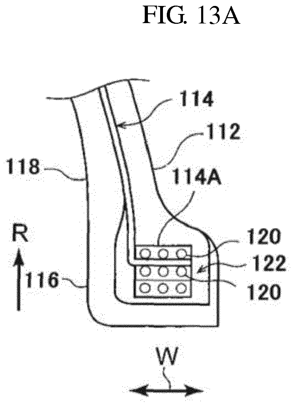

In the examples illustrated in FIGs. 13A to 13D, the end 114A of the reinforcing layer 114 on the bead core 122 side is positioned between the cords 120 of the bead core 122. This can be realized by sandwiching the end 114A of the reinforcing layer 114 between the cords 120 at the time of producing the bead core 122 by superimposing the cords 120 on one another while winding the cords 120 along the tire circumferential direction.

In the example illustrated in FIG. 13A, the end 114A of the reinforcing layer 114 is positioned between the layer that is positioned furthest toward the tire radial-direction outer side and the layer that is positioned in the middle in the tire radial-direction, among the three layers constituting the bead core 122.

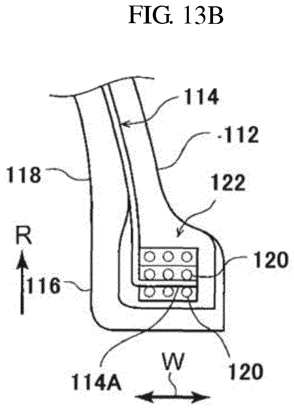

In the example illustrated in FIG. 13B, the end 114A of the reinforcing layer 114 is positioned between the layer that is positioned furthest toward the tire radial-direction inner side and the layer that is positioned in the middle in the tire radial-direction, among the three layers constituting the bead core 122.

In the example illustrated in FIG. 13C, the bead core 122 is a mono-strand bead, and the end 114A of the reinforcing layer 114 is positioned between three pairs of cords 120 adjacent to each other in the tire width direction. In the example illustrated in FIG. 13D, the end 114A of the reinforcing layer 114 is positioned between the layer that is positioned furthest toward the tire width-direction outer side and the layer that is positioned in the middle in the tire width direction center, among the three layers configuring the bead core 122. This bead core 122 is a strand bead that is layered in the tire width direction. In FIGs. 13C and 13D, the end 114A of the reinforcing layer 114 is in a state of being inserted between the cords 120 of the bead core 122 from the tire radial-direction outer side toward the inner side.

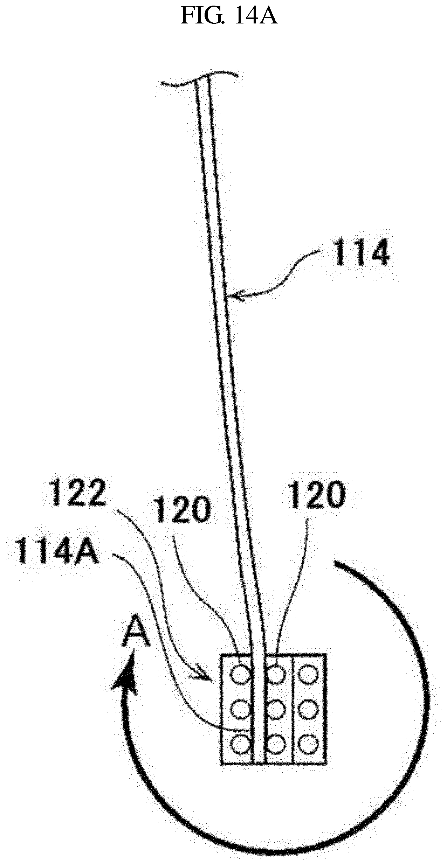

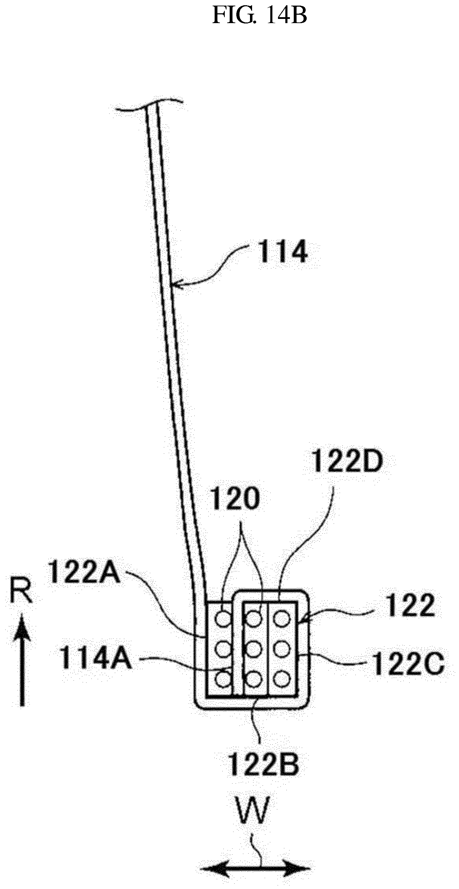

In addition to the above, as illustrated in FIGs. 14A and 14B, after arranging the end 114A of the reinforcing layer 114 between the cords 120 of the bead core 122, the reinforcing layer 114 may be wound on the periphery of the bead core 122, for example, in the direction of the arrow A, and then integrated with the bead core 122 by thermal welding. In this example, the reinforcing layer 114 is joined with the entirety of the tire width-direction outer surface 122A, tire radial-direction inner surface 122B and tire width-direction inner surface 122C of the bead core 122 as well as a part of the tire radial-direction outer surface 122D, and the end 114A is positioned between the cords 120.

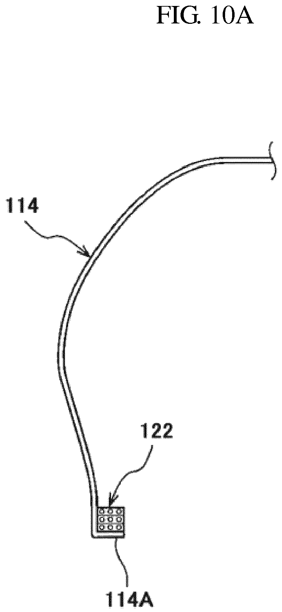

As illustrated in FIG. 10A, each reinforcing layer 114 is thermally welded and integrated with the respective bead core 122. In cases where the end 114A of the reinforcing layer 114 is positioned between the cords 120 of the bead core 122 (FIGs. 13A to 13D, 14A, and 14B), the reinforcing layer 114 is integrated with the bead core 122 at the time of producing the bead core 122.

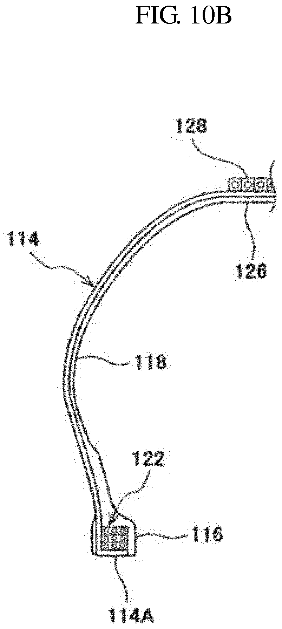

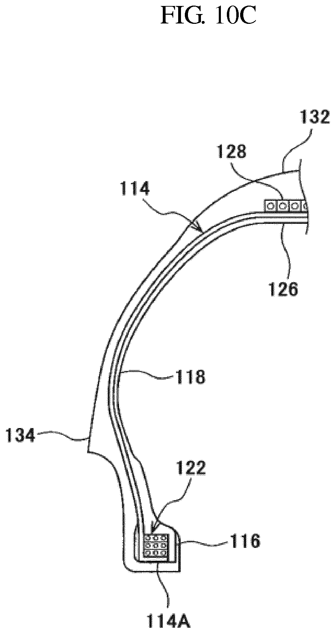

The production process of the tire 110 is simply described in the followings. First, the bead cores 122 and the reinforcing layers 114, which have been integrated, are placed in a mold (not illustrated), and a resin material is supplied into the cavity of the mold, whereby the resin-made tire frame member 112 is integrally molded with the bead cores 122 and the reinforcing layers 114 as illustrated in FIG. 10B. The reinforcing layers 114 are positioned on the outer surface of the tire frame member 112, extending from the side portions 118 to the crown portion 126. On the outer circumference of the crown portion 126 of the tire frame member 112, the above-described belt layer 128 is arranged. Subsequently, as illustrated in FIG. 10C, a rubber layer 134 is molded on the outer side of the side portions 118 and the periphery of the bead portions 116 of the tire frame member 112, and the tread 132 is vulcanization-molded on the tire radial-direction outer side of the belt layer 128. By these processes, the tire 110 of this embodiment is obtained.

As illustrated in FIG. 9, the reinforcing layers 114 extend from the respective bead portions 116 to the side portions 118 and are arranged in an array along the tire circumferential direction. In this case, the reinforcing layers 114 that are adjacent to each other in the tire circumferential direction may be arranged in close contact with each other, or may be arranged with a gap therebetween in the tire circumferential direction.

As one example, the tire radial-direction outer ends 114C of the reinforcing layers 114 extend to the crown portion 126 of the tire frame member 112 and overlap with the belt layer 128. The amount of the overlap with the belt layer 128 is preferably 5 mm or greater from the tire width-direction end of the belt layer 128 toward the tire width-direction center side. The reinforcing layers 114 may extend to the tire width-direction center as well. As for the positions of the tire radial-direction outer ends 14C of the reinforcing layers 114, the reinforcing layers 114 may terminate in the vicinity of the tire maximum-width position in the respective side portions 118, or may terminate before reaching the crown portion 126 (in a so-called buttress portion).

### (Effects)

This embodiment includes, at least: a tire frame member which is made of a resin and which has bead portions, in which bead cores composed of resin-coated cords are embedded, and side portions which continuously extend on the tire radial-direction outer side of the respective bead portions; and reinforcing layers, in which organic fibers are coated with a resin material and thermally welded to the bead cores and which extend from the respective bead portions to the side portions. The effects of this embodiment are described below.

As illustrated in FIG. 9, in the tire 110 of this embodiment, the reinforcing layers 114 are arranged on the outer surface of the tire frame member 112, specifically, extending from the respective bead portions 116 across the side portions 118 to the crown portion 126, and this enables to reduce the damage propagation speed in the tire frame member 112. Consequently, the cut resistance performance of the tire 110 can be improved. In addition, since the reinforcing layers 114 are arranged in an array along the tire circumferential direction and are not in the form of being integrally continuous in the tire circumferential direction, the rigidity in the tire circumferential direction is not excessively high and has a favorable balance with the rigidity in the tire radial direction.

Further, since the outer surfaces of the reinforcing layers 114 are positioned on the outer surface of the tire frame member 112, the durability of the tire 110 against bending deformation is improved. Moreover, since the reinforcing layers 114 are joined to the bead cores 122, the reinforcing layers 114 are capable of bearing the tension generated in the tire 110. Accordingly, the resistance to internal pressure (pressure resistance) can be improved. This consequently enables to reduce the thickness of the tire frame member 112, so that the riding comfort can be improved.

As illustrated in FIGs. 11A to 11F and 12A to 12D, the bead cores 122 are each composed of the cords 120 coated with a resin, and the reinforcing layers 114 are thermally welded to the respective bead cores 122; therefore, as opposed to a case where the reinforcing layers 114 are adhered to the bead cores 122, it is not necessary to arrange a layer for such adhesion.

Particularly, in the examples illustrated in FIGs. 11A to 11F and 12A to 12D, the ends 114A of the reinforcing layers 114 on the bead core 122 side are positioned in the periphery of the respective bead cores 122. Therefore, as compared to a structure in which the ends 114A are folded back at the respective bead cores 122, the production process can be simpler, and the length of the members constituting the reinforcing layers 114 can be made shorter. Consequently, not only the tire frame member 112 can be reinforced and simplified at the same time, but also the weight of the tire 110 can be reduced.

Moreover, in the examples illustrated in FIGs. 13A to 13D, the ends 114A of the reinforcing layers 114 on the bead core 122 side are positioned between the cords 120 of the respective bead cores 122 and, in FIGs. 13C and 13D, the structure in which the bead cores are each a strand bead allows the reinforcing layers 114 and the respective bead cores 122 to be joined together more firmly; therefore, the pressure resistance of the tire 110 can be further improved.

Furthermore, in the tire 110, by constituting the organic fibers of the reinforcing layers 114 arranged in the side portions with two layers of the cord member and the adhesive layer, the organic fibers can be strongly adhered with not only the reinforcing layers 114 but also the tire frame member 112.

In the above-described manner, according to the tire 110 of this embodiment, because of the reinforcing layers 114 that extend from the respective bead portions 116 to the side portions 118, the pressure resistance and the cut resistance performance can both be satisfied while achieving a reduction in the weight of the tire 110.

### [Fifth Embodiment]

In the above-described fourth embodiment, the reinforcing layers 114 are arranged in an array along the tire circumferential direction; however, the reinforcing layers 114 may be configured in an integrated manner. Alternatively, the reinforcing layers 114 that are adjacent to each other in the tire circumferential direction may be partially superimposed with one another. Further, other reinforcing layer (not illustrated) may be arranged between the reinforcing layers 114 that are adjacent to each other in the tire circumferential direction. In this case, the other reinforcing layer and the reinforcing layers 114 may be partially superimposed with one another. Alternatively, a configuration in which one of the tire circumferential sides of the other reinforcing layer is partially superimposed with one adjacent reinforcing layer 114 while the other tire circumferential side is arranged with a gap of, for example, 0.1 mm or larger from the other adjacent reinforcing layer 114 without any overlap, may be adopted as well.

### EXAMPLES

The invention is further described below by way of examples thereof; however, the invention is not restricted to the following examples. A treatment of forming an adhesive layer (RF layer) on a cord member and a treatment of coating the resultant with a resin are hereinafter referred to as "RF treatment" and "resin coating treatment", respectively.

### <Cord Member>

### <Nylon Fiber>

As a cord member, one formed from nylon fibers (nylon 66) having a structure represented by a fineness of 1,400 dtex/2 and a twist number of 39 × 39 (twists/dm), which is a nylon fiber (nylon 66) multifilament, was prepared.

### <RF Composition>

In accordance with the formulation shown below, an RF composition for forming an adhesive layer was prepared.

### <Conditions>

- Sodium hydroxide solution (10%-by-mass aqueous solution) (manufactured by Tosoh Corporation): 33.3 parts by mass
- Formaldehyde (37%-by-mass aqueous solution) (ISOBAN, manufactured by Nippon Kasei Chemical Co., Ltd.): 34.8 parts by mass
- Resorcinol (manufactured by Sumitomo Chemical Co., Ltd.): 27.1 parts by mass
- Water: 904.8 parts by mass

### [Example 1]

### <RF Treatment>

The above-prepared cord member was immersion-coated with the above-prepared RF composition, and the resultant was dried at 160°C for 80 seconds and then baked at 170°C for 60 seconds to obtain organic fibers in which the cord member and an RF adhesive layer were disposed on one another.

### <Resin Coating Treatment>

The thus obtained organic fibers were set on a general laminator (coating apparatus) and, as a resin material, a polyamide-based thermoplastic elastomer (polyamide 12 resin, "UBESTA XPA9055" manufactured by Ube Industries, Ltd.) was coated on the organic fibers under the conditions of a die temperature of 245°C during resin extrusion and a laminator press temperature of 230°C, whereby a laminated plate having a size of 13 cm (width) × 100 mm (length) × 0.8 mm (thickness) was prepared as a test piece 1. It is noted here that the test piece 1 had a mode of containing 100 organic fibers implanted at intervals of 1 mm only in a single row.

### [Comparative Example 1]

As Comparative Example 1, the cord member formed from nylon fibers (nylon 66) was directly set on the above-described coating apparatus without the RF treatment, and a laminated plate was prepared by performing the resin coating treatment in the same manner as in Example 1. This laminated plate was used as a test piece 2.

### <Measurement of Adhesive Strength>

For the above-prepared test pieces of Example and Comparative Example, the adhesive strength was determined by utilizing the method of measuring the adhesive strength of a vulcanized rubber test piece, which method is described in WO 2010/125992. That is, for each of the test pieces, the adhesive strength between the organic fibers and the resin material was measured by a test method in accordance with "7. Peel Test" prescribed in JIS K6301 (1995). In the measurement, the force required for digging out a single organic fiber in the process of digging out the organic fibers embedded in each laminated plate (test piece) at a constant tensile rate was indicated as the adhesive strength (N/fiber).

### <Results>

**[Table 1]**

| | Example 1 | Comparative Example 1 |
|---|---|---|
| Coating material | TPA | TPA |
| Cord member | Nylon 66 | Nylon 66 |
| Treatment method | RF treatment | no treatment |
| Adhesive strength (N/fiber) | 19.3 | 2.5 |

From the results shown in Table 1, it was shown that a test piece (reinforcing layer) having a high peel strength can be obtained by performing an RF treatment on nylon fibers.

Accordingly, it was demonstrated that, by coating organic fibers, which have a structure including a nylon fiber material-containing cord member and an RF layer, with a resin material, a reinforcing layer in which the cord member and the resin material are sufficiently adhered can be obtained.

### DESCRIPTION OF SYMBOLS

1: cord member; 3: RF layer (adhesive layer); 4: organic fiber; 10, 110: tire; 12, 112: tire frame member; 14, 114: reinforcing layer; 14A: tire radial-direction inner end ; 114A: end; 16, 116: bead portion; 18, 118: side portion; 20: tire; 120: cord; 22, 122: bead core; 24: rim; 26, 126: crown portion; 4, 30, 130: organic fiber; 32, 132: tread; f: monofilament; M: multifilament; P: rim separation point

## Claims

1. A tire comprising:
a tire frame member that is made of a resin and that has bead portions and side portions continuously extending on a tire radial-direction outer side of the respective bead portions; and
a reinforcing layer that contains a cord member containing a nylon fiber material and an adhesive layer that is arranged on the cord member and formed from a resorcinol-formaldehyde resin-containing composition and a resin material coating the cord member and the adhesive layer,
wherein the resin material does not encompass a vulcanized rubber.

2. The tire according to claim 1, wherein the resin material contained in the reinforcing layer comprises a polyamide-based thermoplastic resin or a polyurethane-based thermoplastic resin.

3. The tire according to claim 2, wherein the polyamide-based thermoplastic resin is a polyamide-based thermoplastic elastomer.

4. The tire according to any one of claims 1 to 3, wherein the cord member is obtained by twisting in one direction a single multifilament formed by intertwisting plural monofilaments, or obtained by intertwisting two or more of the multifilaments.

5. The tire according to any one of claims 1 to 4, wherein the reinforcing layer is arranged in the side portions.

## Patentansprüche

1. Reifen, umfassend:
ein Reifenrahmenelement, das aus einem Harz hergestellt ist und das Wulstteile und Seitenteile aufweist, die sich kontinuierlich auf einer Außenseite in Reifenradialrichtung der jeweiligen Wulstteile erstrecken; und
eine Verstärkungsschicht, die ein Cordelement enthält, das ein Nylonfasermaterial und eine Klebstoffschicht enthält, die auf dem Cordelement angeordnet und aus einer Resorzin-Formaldehydharz enthaltenden Zusammensetzung und einem Harzmaterial gebildet ist, das das Cordelement und die Klebstoffschicht beschichtet,
wobei das Harzmaterial einen vulkanisierten Kautschuk nicht umschließt.

2. Reifen nach Anspruch 1, wobei das Harzmaterial, das in der Verstärkungsschicht enthalten ist, ein Thermoplastharz auf Polyamidbasis oder ein Thermoplastharz auf Polyurethanbasis umfasst.

3. Reifen nach Anspruch 2, wobei das Thermoplastharz auf Polyamidbasis ein thermoplastisches Elastomer auf Polyamidbasis ist.

4. Reifen nach einem der Ansprüche 1 bis 3, wobei das Cordelement durch Zwirnen, in einer Richtung, eines einzelnen Multifilaments erhalten wird, das durch Verflechten mehrerer Multifilamente gebildet oder durch Verflechten von zwei der Multifilamente oder mehr erhalten wird.

5. Reifen nach irgendeinem der Ansprüche 1 bis 4, wobei die Verstärkungsschicht in den Seitenteilen angeordnet ist.

## Revendications

1. Pneumatique comprenant:
un élément de carcasse de pneumatique qui est constitué d'une résine et qui présente des parties talons et des parties flancs s'étendant continuellement sur un côté externe dans le sens radial du pneumatique des parties talons respectives; et
une couche de renforcement qui contient un élément de câblés contenant un matériau fibre de nylon et une couche adhésive qui est disposée sur l'élément de câblés et formée à partir d'une composition contenant du résorcinol-résine de formaldéhyde et un matériau résine enrobant l'élément de câblés et la couche adhésive,
où le matériau résine n'englobe pas de caoutchouc vulcanisé.

2. Pneumatique selon la revendication 1, dans lequel le matériau résine contenu dans la couche de renforcement comprend une résine thermoplastique à base de polyamide ou une résine thermoplastique à base de polyuréthane.

3. Pneumatique selon la revendication 2, dans lequel la résine thermoplastique à base de polyamide est un élastomère thermoplastique à base de polyamide.

4. Pneumatique selon l'une quelconque des revendications 1 à 3, dans lequel l'élément de câblés est obtenu par la torsion dans un sens d'un multifilament unique formé par l'enchevêtrement de monofilaments multiples, ou obtenu par l'enchevêtrement de deux des multifilaments ou plus.

5. Pneumatique selon l'une quelconque des revendications 1 à 4, dans lequel la couche de renforcement est disposée dans les parties flancs.
